# EUROPEAN PATENT APPLICATION

(11) **EP 4 796 517 A1**
(43) Date of publication of application: **26.08.2026**
(21) Application number: 26150917.8
(22) Date of filing: 08.01.2026
(51) Int. Cl.: C04B 37/00, C04B 35/80, B33Y 80/00, C04B 35/10, C04B 35/14, C04B 35/18, C04B 35/565, C04B 35/584, C04B 35/597, C04B 38/00, B32B 18/00, B32B 3/12

(54) **COMPOSITE PANEL CORE STRUCTURE**

(30) Priority: 24.02.2025 US 202519060921
(71) Applicant: General Electric Company, Cincinnati, Ohio 45215 (US)
(72) Inventor: DUNN, Daniel Gene, Niskayuna, 12309 (US); HENSON, Grant, Niskayuna, 12309 (US); SARRAFI-NOUR, Reza, 12309 Niskayuna (IN); BABER, Forrest, Niskayuna, 12309 (US)
(74) Representative: Openshaw & Co.

(57) **Abstract**

A core structure (110, 130, 140, 150, 160, 170, 180, 200, 300, 320, 340) for a composite panel (100), the core structure (110, 130, 140, 150, 160, 170, 180, 200, 300, 320, 340) including a plurality of hollow ceramic cells (116), each of the plurality of hollow ceramic cells (116) comprising a plurality of ceramic walls (118, 144), each of the plurality of ceramic walls (118, 144) extending from a top (120) to a bottom (122) and a ceramic connector (152) connecting one of the plurality of ceramic walls (118, 144) of a first hollow ceramic cell (116A, 116C, 306A, 322A, 342A) of the plurality of hollow ceramic cells (116) to one of the plurality of ceramic walls (118, 144) of a second hollow ceramic cell (116B, 116D, 166B, 306B, 322B, 342B) of the plurality of hollow ceramic cells (116), the ceramic connector (152) being spaced from at least one of: the top (124) of the first hollow ceramic cell (116A, 116C, 306A, 322A, 342A), the top (124) of the second hollow ceramic cell (116B, 116D, 166B, 306B, 322B, 342B), the bottom (126) of the first hollow ceramic cell (116A, 116C, 306A, 322A, 342A), or the bottom (126) of the second hollow ceramic cell (116B, 116D, 166B, 306B, 322B, 342B).

## Description

### FIELD

The present disclosure relates to composite panels, and more particularly, composite panels with core structures having a plurality of hollow cells.

### BACKGROUND

Modern machinery such as airplanes, automobiles, marine, rockets, space vehicles, or industrial equipment may be subject to extreme operating conditions that include high temperatures, high pressure, and high speeds. Reinforced ceramic matrix composites ("CMCs") comprising fibers dispersed in continuous ceramic matrices of the same or a different composition are well suited for structural applications because of their toughness, thermal resistance, high-temperature strength, and chemical stability. Such composites typically have high strength-to-weight ratio and maintain this attribute over a broad range of temperatures that exceeds metallic alloys. This renders them attractive in applications in which weight is a concern and high temperature structural attributes highly constrain the design of components and systems, such as in aeronautic and space vehicle applications. Their stability at high temperatures renders CMCs very suitable in applications in which components are in contact with a high-temperature gas, such as in a gas turbine engine and re-entry conditions of space vehicles in terrestrial and non-terrestrial environments.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a side schematic view of an exemplary composite panel.
FIG. 2A is a top-down, schematic view of an exemplary core structure of a composite panel.
FIG. 2B is a top-down, schematic view of another exemplary core structure of a composite panel.
FIG. 2C is a top-down, schematic view of another exemplary core structure of a composite panel.
FIG. 2D is a top-down, schematic view of another exemplary core structure of a composite panel.
FIG. 3A is a side, schematic view of an exemplary core structure of a composite panel.
FIG. 3B is a side, schematic view of another exemplary core structure of a composite panel.
FIG. 3C is a side, schematic view of another exemplary core structure of a composite panel.
FIG. 4 is a top-down, schematic view of another exemplary core structure of a composite panel.
FIG. 5A is a top-down, schematic view of an exemplary core structure of a composite panel with composite plies.
FIG. 5B is a top-down, schematic view of another exemplary core structure of a composite panel with a composite ply.
FIG. 5C is a top-down, schematic view of another exemplary core structure of a composite panel with composite plies.
FIG. 6 is a side, schematic view of the core structure of FIG. 5A.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

As used herein, the terms "first," "second," "third," and other ordinals are used to distinguish one component from another and are not intended to signify location or importance of the individual components.

The term "spaced" means "separate from each other." Two cells are "spaced" from each other when they do not share a common wall. A part of a core structure is "spaced" from another part of the core structure when the two parts are separated from each other. It will be appreciated that two cells that are "spaced" from each other may still share a connection, such as a small connector or a composite face sheet, so long as each of the two cells is a complete, unitary structure with no walls in common.

The term "adjacent" means "immediately next to." Two object are "adjacent" to each other when no other similar objects are disposed between the two components. A connector that connects two adjacent objects extends between the two objects without contacting other objects therebetween.

For purposes of the description hereinafter, the terms "upper", "lower", "right", "left", "vertical", "horizontal", "top", "bottom", "lateral", "longitudinal", and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, ceramic matrix composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

In certain embodiments, the reinforcing fibers may be bundled or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials are particularly suitable for higher temperature applications. Additionally, these ceramic materials are lightweight compared to superalloys, yet can still provide strength and durability to the component made therefrom. Therefore, such materials are currently being considered for many gas turbine, space vehicle structure, and propulsion components used in higher temperature sections, such as airfoils (e.g., turbines, and vanes), combustors, shrouds and other like components, nozzles, transition ducts, thermal protection systems, TPS, aerodynamic control surfaces and leading edges that would benefit from the lighter-weight and higher temperature capability these materials can offer.

As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Binder Jet technology, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, or precursors for ultra-high-temperature ceramics, such as polymeric precursors. Each successive layer may be, for example, between about 10 µm and 200 µm, although the thickness may be determined based on any number of parameters and may be any suitable size.

The present disclosure is generally related to composite panels having a plurality of hollow cells. Ceramic composite materials may be formed into core-skin panels in which the cellular core is lighter and less expensive than a solid panel. This can offer advantages in aerospace vehicles with stringent weight and cost limits. Accordingly, a lighter, stronger, and more cost-effective structure would be welcomed in the art. Composite panels can provide for similar properties while reducing weight of the component, and notably, the amount of ceramic matrix composite material used in the component. However, when cells of the core structure form a continuous material path, cracks may propagate between the cells (more specifically, between walls of the cells), reducing overall strength of the core structure.

By forming the hollow ceramic cells separate from each other, cracks that form in one of the hollow ceramic cells do not propagate into others of the hollow ceramic cells. The separate hollow ceramic cells may be formed in one of several arrangements. In one form, all of the hollow ceramic cells are formed separately from each other. In another form, the hollow ceramic cells are formed as cell units, where each cell unit includes hollow ceramic cells that share one or more common ceramic walls, and each cell unit is separate from each other cell unit. In another form, the separate hollow ceramic cells are connected with ceramic connectors that connect small portions of the hollow ceramic cells to each other. The limited connection between the hollow ceramic cells by the cell units and the ceramic connectors reduce propagation of cracks. In particular, the segmented structure of the hollow ceramic cells provides local changes to the stiffness of the composite panel, improving improvement to overall bending stiffness by tailoring the stiffness of specific regions that may undergo greater stress than other regions. The separate hollow ceramic cells allow for geometries that connected hollow ceramic cells may not be able to form, allowing for differently shaped composite panels for different applications. Additionally, composite plies may be added to the hollow ceramic cells to increase toughness of the cells and to reduce crack propagation from adjacent cells.

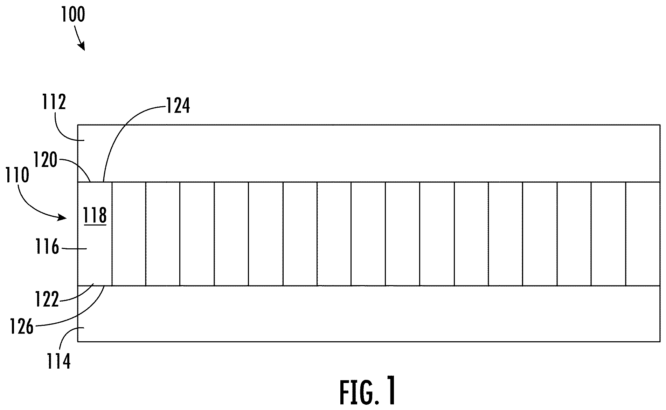

Referring now to the drawings, wherein identical numerals indicate the same elements throughout the figures, FIG. 1 is a cross-sectional view of an exemplary composite panel 100. The composite panel 100 may be used in certain aerospace applications, such as panels for an aircraft. The composite panel 100 includes a core structure 110, a first composite sheet 112 disposed on a top side of the core structure 110, and a second composite sheet 114 disposed on a bottom side of the core structure 110. It will be appreciated that the terms "top" and "bottom" are shown in relation to FIG. 1, and the first and second composite sheets are disposed on opposing sides of the core structure 110 in any orientation. The first and second composite sheets 112, 114 may be a ceramic matrix composite (CMC) material, as described above.

The core structure 110 includes a plurality of hollow ceramic cells 116. In this context, a "hollow" cell means a structure with one or more walls that define a void and includes openings at both ends that connect to the void. The hollow ceramic cells 116 absorb energy from loads applied to the first and second composite sheets 112, 114. The hollow ceramic cells 116 may be a suitable ceramic material, such as silicon carbide as would be used as the matrix of the CMC material of the first and second composite sheets 112, 114. Additive manufacturing of hollow cells uses less material because the hollow cells lack coverings or faces that would enclose the void defined by the one or more walls.

Each of the plurality of hollow ceramic cells 116 in FIG. 1 has a polygonal shape defined by a plurality of ceramic walls 118, explained in further detail below, and it will be appreciated that the hollow ceramic cells 166 may have different shapes, such as circles, ellipses, or a shape with curved walls. FIG. 1 shows one of the plurality of ceramic walls 118 of each of the hollow ceramic cells 116. Each of the ceramic walls 118 extends from a top 120 to a bottom 122. It will be appreciated that the tops 120 of all of the ceramic walls 118 define a top 124 of the hollow ceramic cell 116, and the bottoms 122 of the ceramic walls 118 define a bottom 126 of the hollow ceramic cell 116. That is, the top 120 and bottom 122 refer to a specific ceramic wall 118, and the top 124 and bottom 126 refer to the hollow ceramic cell 116 as a whole. In FIG. 1, the first composite sheet 112 extends along the tops 124 of the hollow ceramic cells 116, and the second composite sheet 114 extends along the bottoms 126 of the hollow ceramic cells 116.

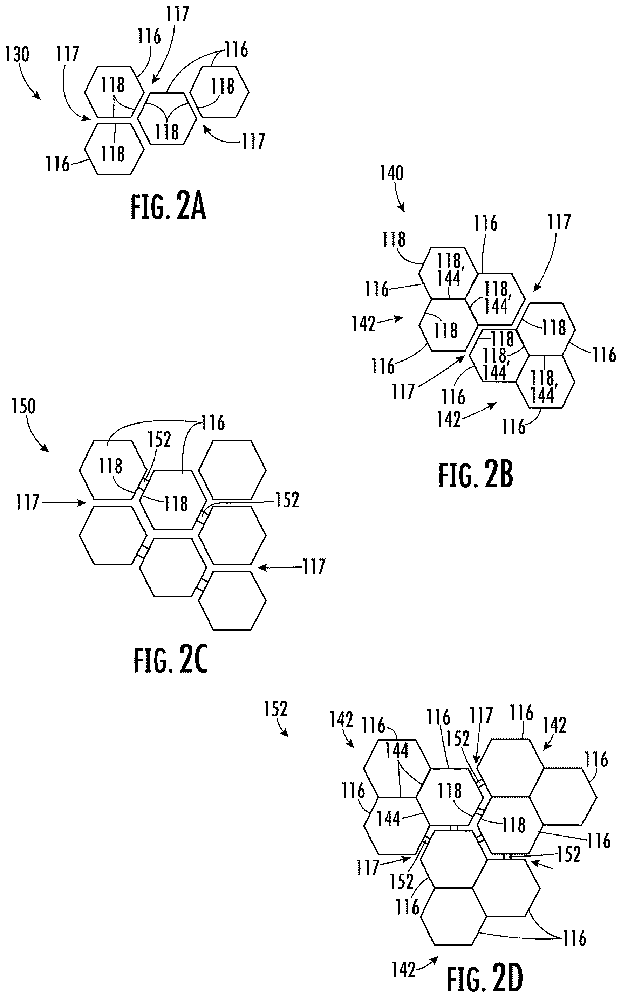

With reference to FIGS. 2A-2D, top-down view of arrangements of hollow ceramic cells of exemplary core structures are shown. FIG. 2A is a top-down view of a core structure 130 including a plurality of hollow ceramic cells 116 separated from each other. FIG. 2B is a top-down view of a core structure 140 including a plurality of hollow ceramic cells 116 arranged in cell units 142. FIG. 2C is a top-down view of a core structure 150 with a plurality of hollow ceramic cells 116 connected to each other with ceramic connectors 152. FIG. 2D is a top-down view of a core structure 154 with cell units 142 connected with ceramic connectors 152.

Now referring to FIG. 2A, in the arrangement shown, each of the plurality of hollow ceramic cells 116 is spaced from others of the plurality of hollow ceramic cells 116 such that a gap 117 is present between facing ceramic walls 118 of adjacent hollow ceramic cells 116. As described above, each hollow ceramic cell 116 includes a plurality of ceramic walls 118 that define a polygonal shape. In FIG. 2A, the polygonal shape is a hexagon, and it will be appreciated that any of the hollow ceramic cells 116 may have a different shape, such as a square, a triangle, or another shape suitable for tiling a plane. By forming each of the hollow ceramic cells 116 individually and/or with gaps 117 in between facing ceramic walls 118, cracks formed in the ceramic walls 118 of one of the hollow ceramic cells 116 do not propagate to other hollow ceramic cells 116. When the hollow ceramic cells 116 are formed individually with no connection therebetween, the first composite sheet 112 is applied quickly to preferentially maintain the gaps 117 between the ceramic walls 118.

Now referring to the core structure 140 of FIG. 2B, at least some of the hollow ceramic cells 116 may be joined into cell units 142. In this context, a "cell unit" is a set of hollow ceramic cells 116 that are monolithically joined such that at least one of the ceramic walls 118 in the cell unit 142 is shared by two hollow ceramic cells 116, i.e., at least one of the ceramic walls 118 is a shared ceramic wall 144. By forming the hollow ceramic cells 116 into cell units 142 with shared ceramic walls 144, the overall strength of each cell unit 142 increases relative to unconnected cells 116, and cracks formed in one cell unit 142 do not propagate to other cell units 142, even if the cracks propagate to other hollow ceramic cells 116 in the cell unit 142.

Now referring to FIG. 2C, the core structure 150 includes ceramic connectors 152 connecting at least some ceramic walls 118 of two adjacent hollow ceramic cells 116. The ceramic connectors 152 are formed during additive printing of the hollow ceramic cells 116, particularly during formation of the ceramic walls 118. The ceramic connectors 152 connect the hollow ceramic cells 116 such that the strength of the core structure 150 increases while reducing propagation of cracks between the hollow ceramic cells 116. That is, as shown in greater detail below, the ceramic connectors 152 are only connected to portions of the ceramic walls 118. As such, a crack that forms in one of the hollow ceramic cells 116 can only propagate through the portion of the ceramic wall 118 to which the ceramic connector 152 is connected. The smaller amount of material connecting the hollow ceramic cells 116 reduces propagation paths for the cracks, improving overall strength of the core structure 150.

Now referring to FIG. 2D, the core structure 154 includes a plurality of cell units 142 connected with ceramic connectors 152. As with the core structure 140, the cell units 142 of the core structure 154 include a plurality of hollow ceramic cells 116 connected with shared walls 144. As with the core structure 150, the ceramic connectors 152 of the core structure 150 connect ceramic walls 118 of adjacent hollow ceramic cells 116. In particular, one cell unit 142 may have two ceramic walls 118 facing two ceramic walls 118 of an adjacent cell unit 142, and the core structure 154 may include two ceramic connectors 152 (one of which is disposed on each of the two ceramic walls 118) to connect the cell units 142.

The gaps 117 between the ceramic walls 118 have respective widths that are sized so that adjacent hollow ceramic cells 116 do not have a shared wall 144 unless the hollow ceramic cells 116 are part of a cell unit 142. In particular, a width of the gaps 117 may be based on a width between two opposing ceramic walls 118 of the hollow ceramic cells 116, such as 10-20% of the width. Alternatively, the width the gaps 117 may be based on the tolerances of layer depth of the additive manufacturing process, such as 10-20 µm.

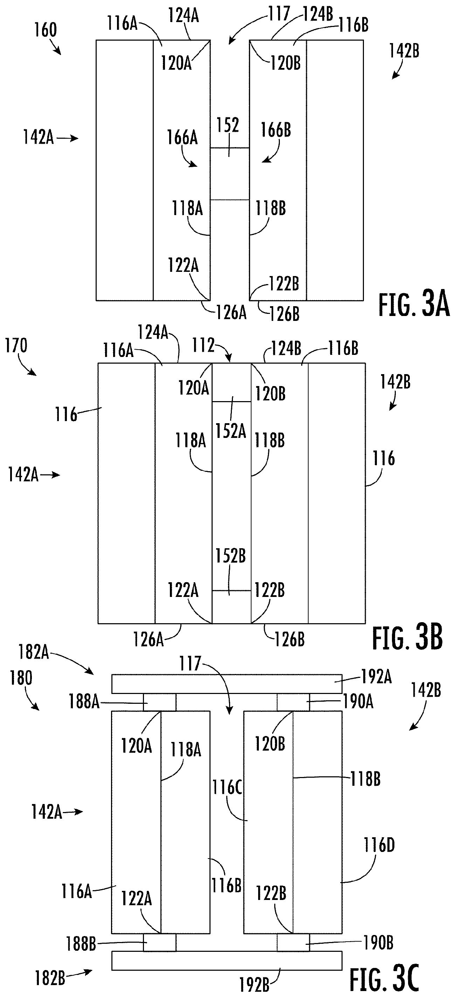

With reference to FIGS. 3A-3C, side views of core structures are shown to illustrate the ceramic connectors 152. More specifically, FIG. 3A is a side view of a core structure 160 with ceramic connectors 152 in a middle portion of hollow ceramic cells 116. FIG. 3B is a side view of a core structure 170 with ceramic connectors 152 at top and bottom portions of hollow ceramic cells 116. FIG. 3C is a side view of a core structure 180 with ceramic connectors 152 connecting upper and lower surfaces of hollow ceramic cells 116.

Now referring to FIG. 3A, the core structure 160 includes a first cell unit 162 including a first hollow ceramic cell 116A and a second cell unit 164 including a second hollow ceramic cell 116B. In the arrangement shown, the ceramic connector 152 is a tab or stalk that is spaced from both a top 124A and a bottom 126A of the first hollow ceramic cell 116A and spaced from both a top 124B and a bottom 126B of the second hollow ceramic cell 116B. That is, a first ceramic wall 118A of the first hollow ceramic cell 116A defines a first middle portion 166A that is spaced from a top 120A and from a bottom 122A of the first ceramic wall 118A, and a second ceramic wall 118B of the second hollow ceramic cell 116B defines a second middle portion 166B that is spaced from a top 120B and a bottom 122B of the second ceramic wall 118B. The "middle portions" 166A, 166B are regions spaced from the tops 124A, 124B and the bottoms 126A, 126B of the hollow ceramic cells 116A, 116B, such as 30-70% of the distance from the tops 124A, 124B to the bottoms 126A, 126B.

The ceramic connector 152 extends from the first middle portion 166A to the second middle portion 166B. In such a form, cracks that form in the first hollow ceramic cell 116A can only propagate to the second hollow ceramic cell 116B through the ceramic connector 152, reducing the overall volume through which the cracks can propagate. It will be appreciated that, in general, the ceramic connector 152 is spaced from at least one of the top 124A of the first hollow ceramic cell 116A, the top 124B of the second hollow ceramic cell 116B, the bottom 126A of the first hollow ceramic cell 116A, or the bottom 126B of the second hollow ceramic cell 116B. The ceramic connector 152 is sized to extend across the gap 117, and thus is the same width as the gap 117, which as described above may be based on the width of the hollow ceramic cells 116 or the tolerances of the additive manufacturing process. As an example, the ceramic connector 152 may have a width of 10-20% of the width of the hollow ceramic cells 116.

Now referring to FIG. 3B, the core structure 170 includes a first ceramic connector 152A and a second ceramic connector 152B connecting two cell units 142A, 142B. More specifically, the first and second ceramic connectors 152A, 152B connect a first hollow ceramic cell 116A of a first cell unit 142A and a second hollow ceramic cell 116B of a second cell unit 142B. Both the first and second ceramic connectors 152A, 152B connect a first ceramic wall 118A of the first hollow ceramic cell 116A to a second ceramic wall 118B of a second hollow ceramic cell 116B, increasing the strength of the connection between the first and second ceramic walls 118A, 118B. That is, the first and second ceramic connectors 152A, 152B connect the same ceramic walls 118A, 118B to each other. In FIG. 3B, the first ceramic connector 152A connects a top 124A of the first hollow ceramic cell 116A to a top 124B of the second hollow ceramic cell 116B, and the second ceramic connector 152B connects a bottom 126A of the first hollow ceramic cell 116A to a bottom 126B of the second hollow ceramic cell 116B. Specifically, the first ceramic connector 152A connects a top 120A of the first ceramic wall 118A to a top 120B of the second ceramic wall 118B, and the second ceramic connector 152B connects the bottom 122A of the first ceramic wall 118A to the bottom 122B of the second ceramic wall 118B In such a form, cracks that form in the first and second cell units 142A, 142B can only propagate in regions near the tops and bottoms of the first and second hollow ceramic cells 116A 116B.

The ceramic connectors 152 of FIGS. 3A-3B may be formed of a suitable material, such as a ceramic. In some embodiments, the ceramic connectors 152 may be a sacrificial material configured to be consumed during a heating process, such as heat treatment, a melt infiltration process, or a chemical vapor infiltration process. In such a form, the ceramic connectors 152 are formed of a different material than the material for the hollow ceramic cells 116, which is not consumed during the heating process. Exemplary sacrificial materials include, but are not limited to, photopolymers, acrylics, and other resins that have lower melting temperatures than the ceramic materials of the hollow ceramic cells 116.

The ceramic connectors 152 hold the hollow ceramic cells 116 during the additive manufacturing process, and burn or ablate during the heating process, leaving the hollow ceramic cells 116 spaced from each other. The heating process may occur after the composite sheets 112, 114 are applied to the core structure 160, 170, and the hollow ceramic cells 116 would be spaced from each other by the gap 117 and connected to the composite sheets 112, 114. In such a form, cracks that form in one of the hollow ceramic cells 116 would not propagate to other hollow ceramic cells 116.

Now referring to FIG. 3C, the core structure 180 includes two ceramic connector assemblies 182A, 182B (collectively, "ceramic connector assemblies 182) connecting two cell units 142A, 142B. Specifically, a first ceramic connector assembly 182A includes a first portion 188A, a second portion 190A, and a third portion 192A. The first portion 188A extends from a top 120A of a first ceramic wall 118A of a first cell unit 142A, the second portion 190A extends from a top 120B of a second ceramic wall 118B of a second cell unit 142B, and the third portion 192A extends from the first portion 188A to the second portion 190A. A second ceramic connector assembly 182B includes a first portion 188B extending from a bottom 122A of the first ceramic wall 118A of the first cell unit 142A, a second portion 190B extending from a bottom 122B of the second ceramic wall 118B of the second cell unit 142B, and a third portion 192B extending from the first portion 188B to the second portion 190B. By connecting to the tops 120A, 120B and bottoms 122A, 122B of the ceramic walls 118A, 118B, cracks that form in the hollow ceramic cells 116 have fewer paths to propagate to other hollow ceramic cells 116.

The first ceramic wall 118A is a shared ceramic wall of a first hollow ceramic cell 116A and a second hollow ceramic cell 116B of the first cell unit 142A. The second ceramic wall 118B is a shared ceramic wall of a first hollow ceramic cell 116C and a second hollow ceramic cell 116D of the second cell unit 142B. That is, the first and second ceramic connector assemblies 182A, 182B connect four hollow ceramic cells 116A, 116B, 116C, 116D among the first and second cell units 142A, 142B. By connecting shared ceramic walls 118 of the hollow ceramic cells 116, the overall strength of the core structure 180 is improved. It will be appreciated that each individual ceramic connector 152 connects one respective ceramic wall 118 of each of the first and second cell units 142A, 142B, and the ceramic connector assemblies 182 connected a plurality of ceramic walls 118 of the first cell unit 142A to a plurality of ceramic walls 118 of the second cell unit 142B. The core structures 160, 170, 180 may include a plurality of ceramic connectors 152 and ceramic connector assemblies 182 connecting different ceramic walls 118 of the first and second cell units 142A, 142B.

The ceramic connectors 152 and ceramic connector assemblies 182 may be formed with the hollow ceramic cells 116 during additive printing of the core structures 160, 170, 180. As an example, for the core structure 160, a manufacturing process may include additively forming lower portions of the plurality of hollow ceramic cells 116, then additively forming the ceramic connectors 152 on the middle portions 166A, 166B between the lower portions of the specific hollow ceramic cells 116, and then additively forming upper portions of the plurality of hollow ceramic cells 116. As another example, for the core structure 170, the ceramic connectors 152B may be formed with the lower portions of the hollow ceramic cells 116 and the ceramic connectors 152A may be formed with the upper portions of the hollow ceramic cells 116. As yet another example, for the core structure 180, the ceramic connector assembly 182B may be formed, then the bottoms 122 the hollow ceramic cells 116 may be formed on the ceramic connector assembly 182B, then the hollow ceramic cells 116 are additively formed to form the tops 120, and then the ceramic connector assembly 182A may be formed on the tops 120 of the hollow ceramic cells 116.

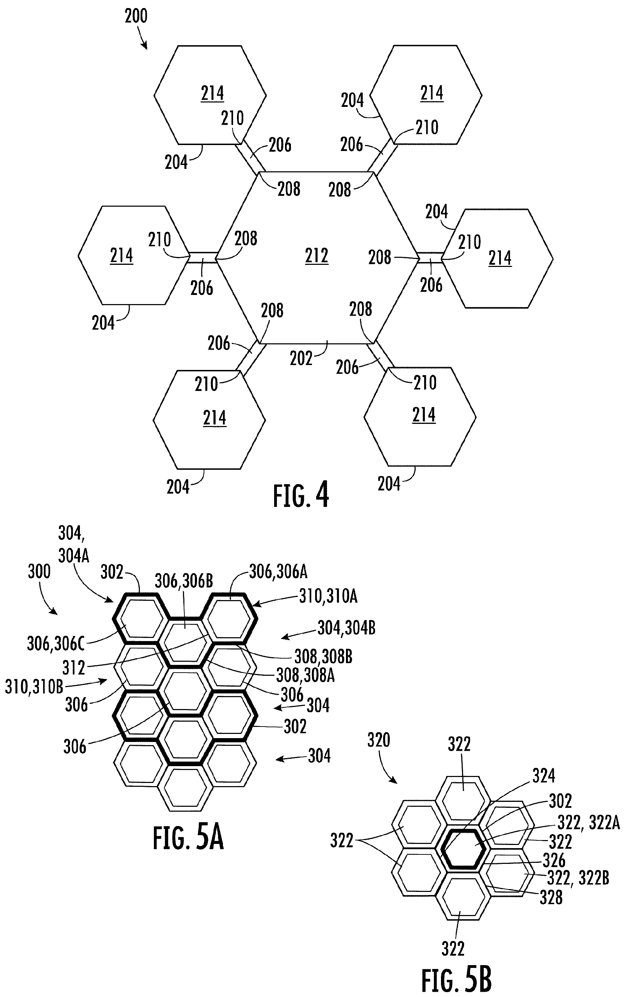

With reference to FIG. 4, a top-down view of another core structure 200 is shown. The core structure 200 includes a plurality of hollow ceramic cells, including a central hollow ceramic cell 202 and six outer hollow ceramic cells 204. It will be appreciated that the hollow ceramic cells 202, 204 of FIG. 4 may be of a similar shape, structure, and design to the hollow ceramic cells 116 of FIGS. 1, 2A-2D and 3A-3C and are numbered differently in FIG. 4 only for clarity.

Ceramic connectors 206 connect each of the outer hollow ceramic cells 204 to the central hollow ceramic cell 202. The central hollow ceramic cell 202 has a hexagonal shape defining six vertices 208, and each of the hollow ceramic cells 204 has a hexagonal shape defining six vertices 210. One of the ceramic connectors 206 connects one vertex of the vertices 208 of the central hollow ceramic cell 202 with one vertex of the vertices 210 of each of the outer hollow ceramic cells 204. The ceramic connectors 206 may be located at respective tops of the hollow ceramic cells 202, 204, respective bottoms of the hollow ceramic cells 202, 204, respective middle portions of the hollow ceramic cells 202, 204, or combinations thereof. The ceramic connectors 206 connect the vertices 208, 210 to reduce crack propagation pathways. Alternatively or additionally, the ceramic connectors 206 may connect the vertices 208 of the central hollow ceramic cell 202 to the walls of the hollow ceramic cells 204, and the ceramic connectors 206 may connect the vertices 210 of the outer hollow ceramic cells 204 to the walls of the central hollow ceramic cell 202. Yet alternatively or additionally, the ceramic connectors 206 may connect the ceramic walls of the hollow ceramic cells 202, 204 without connecting the vertices 208, 210. It will be appreciated that, when the central hollow ceramic cell 202 has a shape that is different from a hexagon, a different number of ceramic connectors 206 are used for a different number of vertices 208.

The central hollow ceramic cell 202 may have a different size than the outer hollow ceramic cells 204. More specifically, a cross-sectional area 212 of the central hollow ceramic cell 202 differs from cross-sectional areas 214 of each of the outer hollow ceramic cell 204. In FIG. 4, the cross-sectional area 212 of the central hollow ceramic cell 202 is larger than the cross-sectional area 214 of any of the outer hollow ceramic cells 204. Alternatively, not shown in the Figures, the cross-sectional area 212 of the central hollow ceramic cell 202 may be smaller than the cross-sectional area 214 of any of the outer hollow ceramic cells 204. Yet alternatively, not shown in the Figures, the cross-sectional areas 214 of some of the outer ceramic cells 204 may be larger than the cross-sectional area 212 of the central hollow ceramic cell 202, and the cross-sectional areas 214 of others of the outer ceramic cells 204 may be smaller than the cross-sectional area 212 of the central hollow ceramic cell 202, and the cross-sectional areas 214 of yet others of the outer ceramic cells 204 may be the same as the cross-sectional area 212 of the central hollow ceramic cell 202.

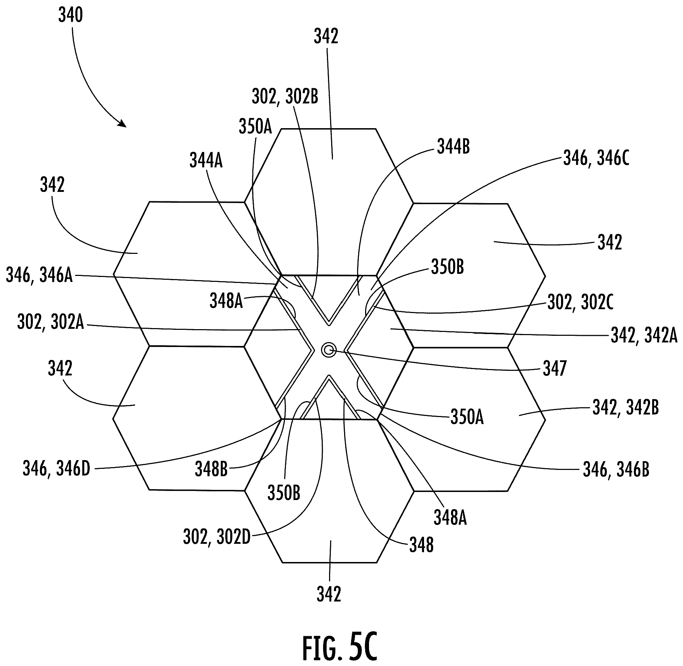

Now referring to FIGS. 5A-5C, top-down views of core structures are shown. FIG. 5A is a top-down view of a core structure 300 with composite plies 302 extending around cell units 304. FIG. 5B is a top-down view of a core structure 320 with a composite ply 302 extending around an interior of a hollow ceramic cell 322. FIG. 5C is a top-down view of a core structure 340 with a composite ply 302 extending between seams of a hollow ceramic cell 342.

With reference to FIG. 5A, the core structure 300 includes a plurality of cell units 304, each cell unit 304 including a plurality of hollow ceramic cells 306 that share one or more ceramic walls 308. It will be appreciated that the hollow ceramic cells 306 may be of a similar shape, structure, and design to the hollow ceramic cells 116 of FIGS. 1-3C and are numbered differently only for clarity. The core structure 300 includes composite plies 302, such as CMC plies. The composite plies 302 are a layer of fibers embedded in a matrix to form a flat structure that can be placed onto a surface. As an example, CMC plies have reinforcing fibers surrounded by a ceramic matrix phase that are placed onto the ceramic walls 308 of the hollow ceramic cells 306. As with the cell units 142 of FIG. 2B, each of the plurality of hollow ceramic cells 306 is monolithic, and the cell units 304 are monolithic.

The composite plies 302 extend around an exterior perimeter 310 of some of the cell units 304. More specifically, a first cell unit 304A includes a first hollow ceramic cell 306A with a first ceramic wall 308A and a second hollow ceramic cell 306B with a second ceramic wall 308B adjacent to the first ceramic wall 308A. The first and second ceramic walls 308A, 308B define a seam 312 (such as a corner) where the first and second ceramic walls 308A, 308B meet, and a composite ply 302 extends from the first ceramic wall 308A to the second ceramic wall 308B across the seam 312. The first cell unit 304 includes a third hollow ceramic cell 306C, and the first, second, and third hollow ceramic cells 306A, 306B, 306C define a first exterior perimeter 310A of the first cell unit 304A. The composite ply 302 extends around the first exterior perimeter 310A of the first cell unit 304A, improving strength of the first cell unit 304A.

The core structure 300 includes a second cell unit 304B with the plurality of hollow ceramic cells 306 that are not among the plurality of hollow ceramic cells 306 of the first cell unit 304A. The second cell unit 304B defines a second exterior perimeter 310B, and at least a portion of the second exterior perimeter 310B lacks the composite ply 302 that extends around the first exterior perimeter 310A of the first cell unit 304A. That is, a portion of the second exterior perimeter 310B is adjacent to and abuts the composite ply 302, and a remainder of the second exterior perimeter 310B is spaced away from the composite ply 302, not in contact with another composite ply, and/or be directly contacting another cell unit.

In such a form, the composite ply 302 is disposed only around the first cell unit 304A, and not the second cell unit 304B. By selectively including composite plies 302 around specific ones of the cell units 304, crack propagation can be reduced or inhibited in specific regions that may be prone to crack formation, particularly with cell units 304 likely to form cracks. The composite plies 302 are applied after additive manufacturing of the cell units 304 at specified hollow ceramic cells 306 that may undergo higher stresses during use. When one unit cell 304 is wrapped with a composite ply 304 around its exterior perimeter and assembled adjacent to another until cell 304 that is not wrapped, the facing cells 304 have composite ply 302 therebetween, essentially in an interior portion of the core structure 300. If a crack develops in one of the adjacent cell units 304, crack propagation may be disrupted upon reaching the composite ply 302 between the facing cells 304 to thereby prevent the crack from propagating to the other of the adjacent unit cells 304.

With reference to FIG. 5B, the core structure 320 includes a plurality of hollow ceramic cells 322. The plurality of hollow ceramic cells 322 are shown as a monolithic structure, where each of the plurality of hollow ceramic cells 322 is connected to each other of the hollow ceramic cells 322. However, it will be appreciated that the plurality of hollow ceramic cells 322 may be arranged into cell units 304, as described above, or may be individually spaced from each other.

A first hollow ceramic cell 322A defines an interior perimeter 324, and a composite ply 302 extends along the interior perimeter 324 of the first hollow ceramic cell 322A. Following formation of the hollow ceramic cells 322, a composite ply 302 is laid along the interior perimeter 324 of the first hollow ceramic cell 322A. The composite ply 302 improves strength of the first hollow ceramic cell 322A, reducing crack formation and propagation. A second hollow ceramic cell 322B shares a common ceramic wall 326 with the first hollow ceramic cell 322A. The second hollow ceramic cell 322B defines an interior perimeter 328 that lacks the composite ply 302. By selectively including composite plies 302 to specific ones of the plurality of hollow ceramic cells 322, regions of the core structure 320 that may otherwise be prone to crack formation can be strengthened with the composite plies 302.

With reference to FIG. 5C, the core structure 340 includes a plurality of hollow ceramic cells 342. A first hollow ceramic cell 342A includes a first ceramic support 344A and a second ceramic support 344B. The first ceramic support 344A connects a first seam 346A and a second seam 346B of the first hollow ceramic cell 342A, and the second ceramic support 344B connects a third seam 346C and a fourth seam 346D of the first hollow ceramic cell 342A. Collectively, the seams 346A, 346B, 346C, 346D are "seams 346." The first and second ceramic supports 344A, 344B meet at an intersection point 347, such as a centroid of the hollow ceramic cell 342A. The intersection point 347 is a hollow region extending through the first and second ceramic supports 344A, 344B through which a fastener (not shown) may be placed. The fastener connects the core structure 340 to at least one of the first and second composite sheets 112, 114, improving overall strength of the composite panel 100. The first and second ceramic supports 344A, 344B are monolithic with the seams 346 and provide additional strength for the first hollow ceramic cell 342A. While two ceramic supports 344A, 344B are shown, it will be appreciated that the core structure 340 may include one ceramic support or more than two ceramic supports for specific strengthening of the first hollow ceramic cell 342A.

The first hollow ceramic cell 342A includes a plurality of composite plies 302 that extend around the first and second ceramic supports 344A, 344B. More specifically, the first ceramic support 344A includes a first side 348A and a second side 350A, and the second ceramic support 344B includes a first side 348B and a second side 350B. A first composite ply 302A extends along the first side 348A of the first ceramic support 344A and the first side 348B of the second ceramic support 344A, and a second composite ply 302B extends along the second side 350A of the first ceramic support 344A and the first side 348B of the second ceramic support 344B. A third composite ply 302C extends along the second side 350A of the first ceramic support 344A and the second side 350B of the second ceramic support 344B, and a fourth composite ply 302D extends along the first side 348A of the first ceramic support 344A and the second side 350B of the second ceramic support 344B. Because the first and second ceramic supports 344A, 344B intersect at the intersection point 348, the first, second, third, and fourth composite plies 302A, 302B, 302C, 302D extend between both the first and second ceramic supports 344A, 344B in V-shapes. As an example, the first composite ply 302A extends from the first side 348A of the first ceramic support 344A to the first side 348B of the second ceramic support 344B, and the second composite ply 302B extends from the second side 350A of the first ceramic support 344A to the first side 348B of the second ceramic support 344B. It will be appreciated that composite plies 302 may be arranged on any or all side of the ceramic supports 344, as specified to reduce or inhibit crack formation or propagation. Second hollow ceramic cell 342B lacks ceramic supports 344 and composite plies 302.

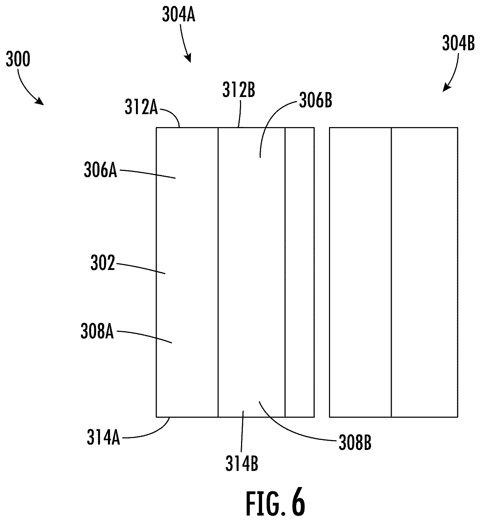

Now referring to FIG. 6, a side, cross-sectional view of the core structure 300 is shown. As shown in FIG. 5A, the core structure 300 includes the first cell unit 304A and the second cell unit 304B. The first cell unit 304A includes a plurality of hollow ceramic cells 306, and each of the hollow ceramic cells 306 includes a plurality of ceramic walls 308. In FIG. 6, a first ceramic wall 308A of a first hollow ceramic cell 306A and a second ceramic wall 308B of a second hollow ceramic cell 306B are shown. The composite ply 302 extends from a top 312A of the first ceramic wall 308A and a top 312B of the second ceramic wall 308B to a bottom 314A of the first ceramic wall 308A and a bottom 314B of the second ceramic wall 308B. By extending along the entirety of the first and second ceramic walls 308A, 308B, the composite ply 302 improves the strength of the first cell unit 304A, reducing crack formation and propagation. The second cell unit 304B lacks any composite plies 302.

Further aspects are provided by the subject matter of the following clauses:

A core structure for a composite panel including the core structure and one or more composite sheets, the core structure including a plurality of hollow ceramic cells, each of the plurality of hollow ceramic cells including a plurality of ceramic walls, each of the plurality of ceramic walls extending from a top to a bottom, and a ceramic connector connecting one of the plurality of ceramic walls of a first hollow ceramic cell of the plurality of hollow ceramic cells to one of the plurality of ceramic walls of a second hollow ceramic cell of the plurality of hollow ceramic cells, the ceramic connector being adjacent to and spaced from at least one of: the top of the first hollow ceramic cell, the top of the second hollow ceramic cell, the bottom of the first hollow ceramic cell, or the bottom of the second hollow ceramic cell.

The core structure of any of the preceding clauses, wherein the ceramic connector is spaced from both the top and the bottom of the first hollow ceramic cell and spaced from both the top and the bottom of the second hollow ceramic cell.

The core structure of any of the preceding clauses, wherein each of the hollow ceramic cells is formed of a ceramic material.

The core structure of any of the preceding clauses, wherein each of the plurality of hollow ceramic cells is spaced from each other of the plurality of hollow ceramic cells.

The core structure of any of the preceding clauses, wherein the one of the plurality of ceramic walls of the first hollow ceramic cell and the one of the plurality of ceramic walls of the second hollow ceramic cell are a shared ceramic wall.

The core structure of any of the preceding clauses, wherein the ceramic connector is connected to the shared ceramic wall.

The core structure of any of the preceding clauses, further including a third hollow ceramic cell of the plurality of hollow ceramic cells, wherein the ceramic connector is further connected to one of the plurality of ceramic walls of the third hollow ceramic cell.

The core structure of any of the preceding clauses, further including a second ceramic connector connecting one of the plurality of ceramic walls of the first hollow ceramic cell of the plurality of hollow ceramic cells to one of the plurality of ceramic walls of the second hollow ceramic cell of the plurality of hollow ceramic cells.

The core structure of any of the preceding clauses, wherein the ceramic connector and the second ceramic connector connect a same one of the plurality of ceramic walls of the first hollow ceramic cell and a same one of the plurality of ceramic walls of the second hollow ceramic cell.

The core structure of any of the preceding clauses, wherein the first hollow ceramic cell has a first vertex, the second hollow ceramic cell has a second vertex, and the ceramic connector connects the first vertex to the second vertex.

The core structure of any of the preceding clauses, wherein a cross-sectional area of the first hollow ceramic cell differs from a cross-sectional area of the second hollow ceramic cell.

The core structure of any of the preceding clauses, wherein the ceramic connector includes a first portion extending from the top of the first hollow ceramic cell, a second portion extending from the top of the second hollow ceramic cell, and a third portion extending from the first portion to the second portion.

The core structure of any of the preceding clauses, wherein the third portion is space from both the top of the first hollow ceramic cell and the top of the second hollow ceramic cell.

The core structure of any of the preceding clauses, further including a second ceramic connector including a first portion extending from the bottom of the first hollow ceramic cell, a second portion extending from the bottom of the second hollow ceramic cell, and a third portion extending from the first portion to the second portion.

The core structure of any of the preceding clauses, wherein the ceramic connector is formed of a sacrificial material configured to be consumed during a heating process.

The core structure of any of the preceding clauses, wherein the heating process is a melt infiltration process or a chemical vapor infiltration process.

The core structure of any preceding clause, wherein the first hollow ceramic cell and the second hollow ceramic cell define a gap therebetween, wherein the gap has a width that is from 10-20% a width between opposing ceramic walls of the first hollow ceramic cell and the second hollow ceramic cell.

A method of manufacturing a core structure for a composite panel, the method including additively forming of a plurality of hollow ceramic cells including a first hollow ceramic cell and a second hollow ceramic cell adjacent to and spaced from the first hollow ceramic cell, additively forming a ceramic connector connecting the first hollow ceramic cell to the second hollow ceramic cell, and applying a ceramic matrix composite (CMC) sheet to respective tops of the plurality of hollow ceramic cells, wherein the ceramic connector is spaced from at least one of: the top of the first hollow ceramic cell, the top of the second hollow ceramic cell, a bottom of the first hollow ceramic cell, or a bottom of the second hollow ceramic cell.

The method of any of the preceding clauses, further including additively forming respective lower portions of the plurality of hollow ceramic cells, additively forming the ceramic connector between the lower portion of the first hollow ceramic cell and the lower portion of the second hollow ceramic cell, and additively forming respective upper portions of the plurality of hollow ceramic cells.

The method of any of the preceding clauses, wherein the first hollow ceramic cell shares a ceramic wall with a third hollow ceramic cell, the third hollow ceramic cell being spaced from the second hollow ceramic cell.

The method of any of the preceding clauses, wherein each of the hollow ceramic cells is formed of a ceramic material.

A core structure for a composite panel including the core structure and one or more composite sheets, the core structure including a plurality of hollow ceramic cells, each of the plurality of hollow ceramic cells defined by a plurality of ceramic walls, each of the plurality of ceramic walls extending from a top to a bottom, and at least one composite ply extending from the top of a first one of the plurality of walls to the bottom of the first one of the plurality of walls and extending from the first wall of the plurality of ceramic walls to a second wall of the plurality of ceramic walls and across a seam defined by the first wall and the second wall.

The core structure of any of the preceding clauses, wherein the plurality of hollow ceramic cells defines a cell unit including two or more of the plurality of hollow ceramic cells that share at least one ceramic wall, the cell unit defining an exterior perimeter, wherein the at least one composite ply extends around the exterior perimeter of the cell unit.

The core structure of any of the preceding clauses, wherein a first hollow ceramic cell of the cell unit includes a first ceramic wall, a second hollow ceramic cell of the cell unit includes a second ceramic wall adjacent to or spaced from the first ceramic wall, and the at least one composite ply extends from the first ceramic wall to the second ceramic wall.

The core structure of any of the preceding clauses, wherein the cell unit is monolithic.

The core structure of any of the preceding clauses, wherein the plurality of hollow ceramic cells defines a second cell unit including two or more of the plurality of hollow ceramic cells that are not among the two or more of the plurality of hollow ceramic cells of the cell unit, wherein at least a portion of an exterior perimeter of the second cell unit lacks the at least one composite ply.

The core structure of any of the preceding clauses, wherein the plurality of hollow ceramic cells includes a first hollow ceramic cell defining an interior perimeter, and the at least one composite ply extends along the interior perimeter of the first hollow ceramic cell.

The core structure of any of the preceding clauses, wherein the plurality of hollow ceramic cells includes a second hollow ceramic cell that shares a common wall with the first hollow ceramic cell, wherein the second hollow ceramic cell defines an interior perimeter that lacks the at least one composite ply.

The core structure of any of the preceding clauses, wherein one of the plurality of hollow ceramic cells is a first hollow ceramic cell, the first hollow ceramic cell including a ceramic support connecting two seams of the first hollow ceramic cell, wherein the at least one composite ply extends along the ceramic support.

The core structure of any of the preceding clauses, wherein the ceramic support includes a first side and a second side and the at least one composite ply includes a first composite ply extending along the first side and a second composite ply extending along the second side.

The core structure of any of the preceding clauses, further including a second ceramic support connecting two other seams of the first ceramic cell than the two seams connected by the ceramic support, and wherein the at least one composite ply includes a first composite ply extending along the ceramic support and a second composite ply extending along the second ceramic support.

The core structure of any of the preceding clauses, wherein the ceramic support and the second ceramic support meet at an intersection point.

The core structure of any of the preceding clauses, wherein the ceramic support is monolithic with the two seams.

The core structure of any of the preceding clauses, wherein the at least one composite ply is a ceramic matrix composite (CMC) ply.

The core structure of any of the preceding clauses, wherein each of the plurality of hollow ceramic cells is monolithic.

A composite panel including a core structure including a plurality of hollow ceramic cells, each of the plurality of hollow ceramic cells including a top and a bottom, and at least one composite ply extending from the top of a first hollow ceramic cell of the plurality of hollow ceramic cells to the bottom of the first hollow ceramic cell and extending across a seam of the first hollow ceramic cell, and a composite sheet extending across the respective tops of each of the plurality of hollow ceramic cells.

The composite panel of any of the preceding clauses, wherein the plurality of hollow ceramic cells includes a second hollow ceramic cell, the first hollow ceramic cell and the second hollow ceramic cell include a cell unit defining an exterior perimeter including the seam of the first hollow ceramic cell, and the at least one composite ply extends around the exterior perimeter of the cell unit.

The composite panel of any of the preceding clauses, wherein the first hollow ceramic cell defines an interior perimeter including the seam, and the at least one composite ply extends along the interior perimeter of the first hollow ceramic cell.

The composite panel of any of the preceding clauses, wherein the first hollow ceramic cell includes a ceramic support connecting the seam of the first hollow ceramic cell to a second seam of the first hollow ceramic cell, wherein the at least one composite ply extends along the ceramic support.

The composite panel of any of the preceding clauses, further including a second composite sheet extending across the respective bottoms of each of the plurality of hollow ceramic cells.

The composite panel of any of the preceding clauses, wherein each of the plurality of hollow ceramic cells is monolithic.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A core structure (110, 130, 140, 150, 160, 170, 180, 200, 300, 320, 340) for a composite panel (100), the core structure (110, 130, 140, 150, 160, 170, 180, 200, 300, 320, 340) comprising:
a plurality of hollow ceramic cells (116), each of the plurality of hollow ceramic cells (116) comprising a plurality of ceramic walls (118, 144), each of the plurality of ceramic walls (118, 144) extending from a top (120) to a bottom (122); and
a ceramic connector (152) connecting one of the plurality of ceramic walls (118, 144) of a first hollow ceramic cell (116A, 116C, 306A, 322A, 342A) of the plurality of hollow ceramic cells (116) to one of the plurality of ceramic walls (118, 144) of a second hollow ceramic cell (116B, 116D, 166B, 306B, 322B, 342B) of the plurality of hollow ceramic cells (116), the first hollow ceramic cell (116A, 116C, 306A, 322A, 342A) being adjacent to and spaced from the second hollow ceramic cell (116B, 116D, 166B, 306B, 322B, 342B), the ceramic connector (152) being spaced from at least one of:
the top (124) of the first hollow ceramic cell (116A, 116C, 306A, 322A, 342A),
the top (124) of the second hollow ceramic cell (116B, 116D, 166B, 306B, 322B, 342B),
the bottom (126) of the first hollow ceramic cell (116A, 116C, 306A, 322A, 342A), or
the bottom (126) of the second hollow ceramic cell (116B, 116D, 166B, 306B, 322B, 342B).

2. The core structure (110, 130, 140, 150, 160, 170, 180, 200, 300, 320, 340) of any of the preceding claims, wherein the ceramic connector (152) is spaced from both the top (124) and the bottom (126) of the first hollow ceramic cell (116A, 116C, 306A, 322A, 342A) and spaced from both the top (124) and the bottom (126) of the second hollow ceramic cell (116B, 116D, 166B, 306B, 322B, 342B).

3. The core structure (110, 130, 140, 150, 160, 170, 180, 200, 300, 320, 340) of any of the preceding claims, wherein each of the plurality of hollow ceramic cells (116) is spaced from each other of the plurality of hollow ceramic cells (116).

4. The core structure (110, 130, 140, 150, 160, 170, 180, 200, 300, 320, 340) of any of the preceding claims, wherein the one of the plurality of ceramic walls (118, 144) of the first hollow ceramic cell (116A, 116C, 306A, 322A, 342A) and the one of the plurality of ceramic walls (118, 144) of the second hollow ceramic cell (116B, 116D, 166B, 306B, 322B, 342B) are a shared ceramic wall (118, 144).

5. The core structure (110, 130, 140, 150, 160, 170, 180, 200, 300, 320, 340) of any of the preceding claims, further comprising a third hollow ceramic cell (306C) of the plurality of hollow ceramic cells (116), wherein the ceramic connector (152) is further connected to one of the plurality of ceramic walls (118, 144) of the third hollow ceramic cell (306C).

6. The core structure (110, 130, 140, 150, 160, 170, 180, 200, 300, 320, 340) of any of the preceding claims, further comprising a second ceramic connector (152) connecting one of the plurality of ceramic walls (118, 144) of the first hollow ceramic cell (116A, 116C, 306A, 322A, 342A) of the plurality of hollow ceramic cells (116) to one of the plurality of ceramic walls (118, 144) of the second hollow ceramic cell (116B, 116D, 166B, 306B, 322B, 342B) of the plurality of hollow ceramic cells (116).

7. The core structure (110, 130, 140, 150, 160, 170, 180, 200, 300, 320, 340) of any of the preceding claims, wherein the first hollow ceramic cell (116A, 116C, 306A, 322A, 342A) has a first vertex (208), the second hollow ceramic cell (116B, 116D, 166B, 306B, 322B, 342B) has a second vertex (210), and the ceramic connector (152) connects the first vertex (208) to the second vertex (210).

8. The core structure (110, 130, 140, 150, 160, 170, 180, 200, 300, 320, 340) of any of the preceding claims, wherein a cross-sectional area of the first hollow ceramic cell (116A, 116C, 306A, 322A, 342A) differs from a cross-sectional area of the second hollow ceramic cell (116B, 116D, 166B, 306B, 322B, 342B).

9. The core structure (110, 130, 140, 150, 160, 170, 180, 200, 300, 320, 340) of any of the preceding claims, wherein the ceramic connector (152) includes a first portion (188A, 188B) extending from the top (124) of the first hollow ceramic cell (116A, 116C, 306A, 322A, 342A), a second portion (190A, 190B) extending from the top (124) of the second hollow ceramic cell (116B, 116D, 166B, 306B, 322B, 342B), and a third portion (192A, 192B) extending from the first portion (188A, 188B) to the second portion (190A, 190B).

10. The core structure (110, 130, 140, 150, 160, 170, 180, 200, 300, 320, 340) of any of the preceding claims, wherein the third portion (192A, 192B) is spaced from both the top (124) of the first hollow ceramic cell (116A, 116C, 306A, 322A, 342A) and the top (124) of the second hollow ceramic cell (116B, 116D, 166B, 306B, 322B, 342B).

11. The core structure (110, 130, 140, 150, 160, 170, 180, 200, 300, 320, 340) of any of the preceding claims, further comprising a second ceramic connector (152) including a first portion (188A, 188B) extending from the bottom (126) of the first hollow ceramic cell (116A, 116C, 306A, 322A, 342A), a second portion (190A, 190B) extending from the bottom (122) of the second hollow ceramic cell (116B, 116D, 166B, 306B, 322B, 342B), and a third portion (192A, 192B) extending from the first portion (188A, 188B) to the second portion (190A, 190B).

12. The core structure (110, 130, 140, 150, 160, 170, 180, 200, 300, 320, 340) of any of the preceding claims, wherein the heating process is a melt infiltration process or a chemical vapor infiltration process.

13. A method of manufacturing a core structure (110, 130, 140, 150, 160, 170, 180, 200, 300, 320, 340) for a composite panel (100), the method comprising:
additively forming of a plurality of hollow ceramic cells (116) including a first hollow ceramic cell (116A, 116C, 306A, 322A, 342A) and a second hollow ceramic cell (116B, 116D, 166B, 306B, 322B, 342B) adjacent to and spaced from the first hollow ceramic cell (116A, 116C, 306A, 322A, 342A);
additively forming a ceramic connector (152) connecting the first hollow ceramic cell (116A, 116C, 306A, 322A, 342A) to the second hollow ceramic cell (116B, 116D, 166B, 306B, 322B, 342B); and
applying a ceramic matrix composite (CMC) sheet to respective tops of the plurality of hollow ceramic cells (116).

14. The method of any of the preceding claims, further comprising additively forming respective lower portions of the plurality of hollow ceramic cells (116), additively forming the ceramic connector (152) between the lower portion of the first hollow ceramic cell (116A, 116C, 306A, 322A, 342A) and the lower portion of the second hollow ceramic cell (116B, 116D, 166B, 306B, 322B, 342B), and additively forming respective upper portions of the plurality of hollow ceramic cells (116).

15. The method of any of the preceding claims, wherein the first hollow ceramic cell (116A, 116C, 306A, 322A, 342A) shares a ceramic wall (118, 144) with a third hollow ceramic cell (306C), the third hollow ceramic cell (306C) being spaced from the second hollow ceramic cell (116B, 116D, 166B, 306B, 322B, 342B).
